# FASCICULE DE BREVET EUROPEEN

(11) **EP 2 228 695 B1**
(45) Date de publication et mention de la délivrance du brevet: **03.08.2011**
(21) Numéro de dépôt: 09005035.2
(22) Date de dépôt: 04.04.2009
(51) Int. Cl.: G04B 37/08, G04B 39/02, G04G 21/04

(54) **Joint pour la fermeture étanche entre la glace et la carrure d'une boîte de montre comprenant un module électronique et boîte de montre équipée d'un tel joint**
Dichtung zum wasserdichten Abschließen zwischen dem Glas und dem Gehäuse einer Armbanduhr, welche Dichtung ein elektronisches Modul umfasst und Uhrgehäuse, die eine solche Dichtung aufweisst.
Gasket for sealing the glass and the middle of a watch case comprising an electronic module and watch case equipped with such a gasket

(30) Priorité: 13.03.2009 CH 3752009
(43) Date de publication de la demande: 15.09.2010
(73) Titulaire: Winwatch SA, 1950 Sion (CH)
(72) Inventeur: Kalbermatten, Léo, 1950 Sion (CH)

(56) Documents cités:
- EP-A1- 1 378 805
- US-A1- 2005 212 675
- US-A1- 2007 057 769
- US-B1- 7 215 600

## Description

La présente invention concerne un joint d'étanchéité, en particulier un joint pour la fermeture étanche entre la glace et la carrure d'une boîte de montre, joint qui comprend un module électronique et une antenne amplificatrice, ainsi qu'une montre-bracelet équipée d'un tel dispositif. Les caractéristiques essentielles à la définition de l'invention sont contenues dans les revendications 1, 2 et 3.

Le module électronique est constitué d'une antenne et d'une puce de circuit intégré (IC) au moins et est placé sur ou dans le joint d'étanchéité dans une position permettant l'identification par un appareil de lecture et/ou d'écriture externe utilisant la technologie de l'identification par radiofréquence. L'objectif de la présente invention est d'utiliser les progrès obtenus dans le domaine des systèmes d'identification en fréquence radio (RFID), en vue d'offrir la traçabilité et l'authentification de la montre-bracelet et/ou de ses composants tout au long du cycle de vie du produit, par exemple grâce au réseau EPC (Electronic Product Code) qui constitue le fondement à l'Internet des objets. Ou bien offrant des développements et applications ne concernant pas la montre-bracelet, comme par exemple le contrôle d'accès ou d'identité du porteur de montre, la clef électronique, le paiement sans contact, le ticketing ou bien la NFC (Near Field Communication) qui constitue le fondement à l'Internet des services. On connaît déjà de nombreux exemples de montres équipées de la technologie RFID. Il est bien connu d'équiper la montre, généralement la montre-bracelet d'un transpondeur pour la mémorisation d'information qui comprend une puce reliée à une antenne et qui peut communiquer sans contact par des signaux radio fréquences avec un lecteur externe. Le transpondeur, aussi appelé tag ou radio-étiquette, est souvent de type passif, l'énergie lui étant fournie par les fréquences radio émis par le lecteur externe. Selon l'art antérieur et les nombreuses divulgations publiées à ce jour, comme par exemple les brevets ou les demandes de brevet CH692069, CH689360, CH694111, EP1679562, EP1597636, EP1892651, US6484947, CH690525, CH691094, DE19613491, EP1113346, EP1420477, JP2004325315, JP2001006007, JP2001042068, EP1378805, EP1398676, EP1318437, EP0741433, EP1213629, EP0884662, le transpondeur est intégré dans la boîte de montre, dans la lunette, dans la carrure, dans le cadran, dans le fond, dans le bracelet, dans l'aiguille de montre, dans l'axe d'une aiguille ou bien dans la glace de montre. Toutefois aucune des divulgations publiées, ni l'état de la technique connu à ce jour, ne présente l'idée d'utiliser le joint prévu pour la fermeture étanche entre la glace et la carrure d'une boîte de montre comme support, afin d'y loger un module électronique qui porte des données pouvant être captées par un lecteur à fréquence radio. Le brevet US2005/212675 décrit pour sa part un joint d'étanchéité contenant uniquement un transpondeur. La présente invention comble cette lacune de la manière définie dans les revendications. Selon les multiples formes d'exécutions possibles, on peut imaginer que le joint d'étanchéité qui porte le module électronique couplé à une antenne amplificatrice, se présente par exemple sous forme d'un anneau, respectivement d'une bague circulaire en matière diélectrique souple. Mais bien entendu, le joint peut aussi se présenter sous forme de joint de colle. De tels joints de colle qui s'appliquent et/ou s'injectent à l'état liquide ou semi-solide, qui se calent entre la glace et la carrure et puis qui se solidifient lors du séchage pour assurer l'étanchéité finale, sont bien connus par l'homme de métier et utilisés dans l'industrie horlogère depuis longtemps.

Le but de la présente invention est d'équiper le joint d'étanchéité et/ou le joint de colle avec un module électronique et une antenne amplificatrice. La présente invention doit résoudre les problèmes qui se posent pour une intégration non-obstrusive, à moindre encombrement et à moindre coût du module électronique dans la boîte de montre qui est souvent métallique, et qui est particulièrement néfaste aux ondes radio (effet de blindage/cage de Faraday). De plus, l'invention doit trouver une solution adapté pour un emplacement propice dudit module électronique dans la boîte de montre, afin de faciliter et d'optimiser la lecture et/ou écriture avec le lecteur externe.

L'art antérieur cherche à résoudre les problèmes liés au blindage, respectivement à la réflexion et/ou à l'absorption des signaux radio qui essentiellement sont occasionnés par les composants métalliques se trouvant dans une montre, en y plaçant un transpondeur avec une antenne de très grande taille. Ce qui demande une adaptation dans la structure architecturale et mécanique de la boîte de montre et ce qui nécessite une modification dans le design, dans la conception et dans la construction de la montre-bracelet. Cela rend aussi une implémentation standardisée de la technologie RFID dans la montre-bracelet difficile et occasionne un coût supplémentaire dans la fabrication de la montre. Quant au fait d'une intégration du transpondeur dans le bracelet, comme proposé par d'autres publications connues, le bracelet est sujet à l'usure, particulièrement s'il est fait d'un matériel souple tel que le cuir ou le caoutchouc. Le transpondeur est exposé à l'usure et la manipulation répétitive du bracelet autour du poignet du porteur de montre. De plus, si le bracelet est en métal, le problème du blindage des ondes radio persiste. C'est pourquoi les solutions proposées par l'art antérieur ne peuvent donner que des résultats peu satisfaisants. La présente invention va résoudre ces problèmes de la manière définie dans les revendications.

L'avantage principal recherché de la présente invention est de tirer profit des caractéristiques diélectriques du joint, mais aussi de la glace de montre adjacente au joint comprenant le module électronique. La glace qui est un substrat diélectrique parfait pour la transmission des ondes radio et qui en contact et/ou à proximité direct avec ledit joint comprenant le module électronique, favorise grandement la transmission des signaux radio échangés entre le lecteur et le module électronique logé dans ou sur le joint d'étanchéité, respectivement dans le joint de colle. Un autre avantage recherché est l'ajout et/ou le remplacement aisé dudit joint comprenant le module électronique et une antenne amplificatrice. La montre décrite dans la présente invention peut être équipée d'un module électronique couplé magnétiquement ou électro-magnétiquement à une antenne amplificatrice à tout moment de sa vie. L'échange s'opère dès lors par l'extraction de l'ancien joint dans la montre existante et/ou ancienne, puis en ajoutant le nouveau joint équipé du module électronique et de l'antenne, ou en ajoutant directement un joint avec le module électronique et l'antenne qui sera placé dans la montre neuve lors de sa fabrication. Un avantage recherché est celui de l'implémentation du module électronique de façon à ne pas affecter l'architecture intérieure de la boîte de montre, grâce à l'emplacement du module électronique et de l'antenne à l'extérieur du boîtier contenant le mouvement mécanique et/ou automatique.

Il en résulte un avantage, que la montre garde son intégrité mécanique, architectural et esthétique d'origine. Un avantage qui est primordial pour les montres de luxe dans le moyen et haut de gamme. Un avantage de la présente invention est celui qu'offre la possibilité d'utiliser un module électronique de petite taille, voir de très petite taille dans un proche futur, qui peut être détecté par le lecteur externe à une distance satisfaisante, malgré sa petite taille et antenne. Le module électronique peut donc être placé discrètement sur, ou dans le joint, et se trouve ainsi à proximité rapprochée avec le lecteur externe. Le problème lié au blindage, à la réflexion ou l'absorption des signaux radio par la carrure métallique adjacente est également résolu, car les fréquences radio passent à travers le joint puis par la glace (qui est le seul obstacle entre le lecteur externe et le joint contenant le module électronique), quasi sans atténuation, voir même en obtenant un effet amplificateur par la glace. Un avantage finalement recherché de l'invention est de pouvoir être usiné à l'aide de machines et outils conventionnels simples, prévus pour la production en grandes séries.

Pour atteindre cet objectif la présente invention utilise le joint d'étanchéité, respectivement le joint de colle comme support pour le module électronique et l'antenne amplificatrice, offrant ainsi une solution idéale pour résoudre les problèmes précités et offrant l'avantage d'une intégration esthétique, fonctionnelle et économique du module électronique dans la montre-bracelet.

D'autres avantages de la présente invention apparaîtront dans la description suivante faite à l'aide des dessins annexés qui illustrent, schématiquement et à titre d'exemples non limitatifs, deux modes d'exécution de cette invention et dans lequel :
- la fig. 1.1 est une vue en perspective simplifiée du joint pour la fermeture étanche entre la glace et la carrure d'une boîte de montre selon l'art antérieur.
- la fig. 1.2 est une vue en perspective explosée de la boîte de montre, montrant de façon simplifiée la carrure, le joint et la glace selon l'art antérieur.
- la fig. 1.3 est une coupe simplifiée dans la montre-bracelet selon l'art antérieur.
- la fig. 2.1 est une vue en perspective simplifiée du joint pour la fermeture étanche entre la glace et la carrure d'une boîte de montre, comprenant le module électronique selon un premier mode d'exécution non limitatif de l'invention.
- la fig. 2.2 est une vue en perspective explosée de la boîte de montre, montrant de façon simplifiée la carrure, le joint comprenant le module électronique, et la glace selon un premier mode d'exécution non limitatif de l'invention.
- la fig. 2.3 est une coupe agrandie simplifiée dans la montre-bracelet selon un premier mode d'exécution non limitatif de l'invention.
- la fig. 3 représente schématiquement le module électronique vu de face, constitué d'une antenne reliée électriquement à une puce de circuit intégré (IC).
- la fig. 4 représente schématiquement le micro-module électronique vu de face, constitué d'une puce de circuit intégré (IC) et d'une antenne intégrée à la puce, relié par couplage magnétique et/ou électromagnétique à une antenne amplificatrice.
- la fig. 5.1 est une vue en perspective simplifiée du joint pour la fermeture étanche entre la glace de fond en saphir et la carrure d'une boîte de montre selon l'art antérieur.
- la fig. 5.2 est une vue en perspective explosée de la boîte de montre, montrant de façon simplifiée la carrure, le joint et la glace de fond en saphir selon l'art antérieur.
- la fig. 5.3 est une coupe très simplifiée dans le fond de la boîte de montre selon l'art antérieur.
- la fig. 6.1 est une vue en perspective simplifiée du joint pour la fermeture étanche entre la glace de fond en saphir et la carrure d'une boîte de montre, comprenant le module électronique selon un deuxième mode d'exécution non limitatif de l'invention.
- la fig. 6.2 est une vue en perspective explosée de la boîte de montre, montrant de façon simplifiée la carrure, le joint comprenant le module électronique, et la glace de fond en saphir selon un deuxième mode d'exécution non limitatif de l'invention.
- la fig. 6.3 est une coupe très simplifiée dans le fond de la boîte de montre selon un deuxième mode d'exécution non limitatif de l'invention.

Pour des raisons de clarté, nous avons décidé de définir préalablement la terminologie utilisée dans la présente description et les deux modes de réalisation non-limitatifs avec la numérotation suivante:
- 1 =: joint / joint d'étanchéité / joint de colle
- 2 =: module électronique / micro-module électronique
- 2.1 =: puce de circuit intégré (IC)
- 2.2 =: antenne
- 2.3 =: antenne amplificatrice
- 3 =: glace / glace de fond en saphir
- 4 =: carrure
- 5 =: boîte de montre

Bien que l'invention ne soit évidemment pas limitée aux deux modes de réalisation figurant ci-après, la description qui suit est faite dans le cas où le module électronique 2 dont le joint d'étanchéité 1 est équipé, est prévu pour mémoriser des informations qui concernent la montre elle-même ou bien qui sont destinées à d'autres applications qui ne sont pas liées à la montre pour être placé à proximité, de quelques millimètres à plusieurs centimètres selon le besoin, de l'antenne d'émission et de réception d'un appareil de lecture et/ou d'écriture externe, non représenté sur le dessin avec lequel il est amené à communiquer. Ladite technologie de transmission de données sur laquelle repose la présente invention, utilise communément l'identification par radiofréquence (RFID) qui ne sera pas décrite ici, car elle fait partie de l'état de la technique et est connue depuis longtemps déjà et largement utilisée dans l'industrie. On précisera toutefois, que la technologie RFID utilise généralement des transpondeurs passifs et/ou semi-actifs et/ou actifs; le mode de fonctionnement en couplage magnétique (couplage capacitif et/ou par induction) concerne les systèmes oeuvrant aux fréquences de 125 kHz en basse fréquences LF de 13.56 MHz en haute fréquence HF, tandis que le mode de fonctionnement en couplage électrique concerne les systèmes oeuvrant aux fréquences UHF allant de 860 à 960MHZ et de 2.45GHz et plus aux fréquences micro-ondes.

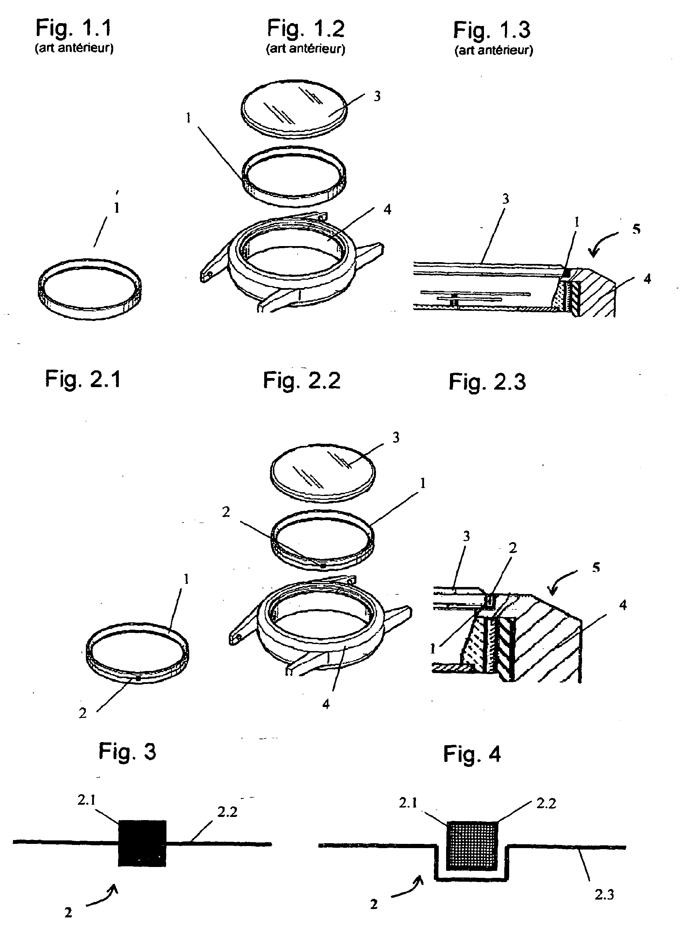

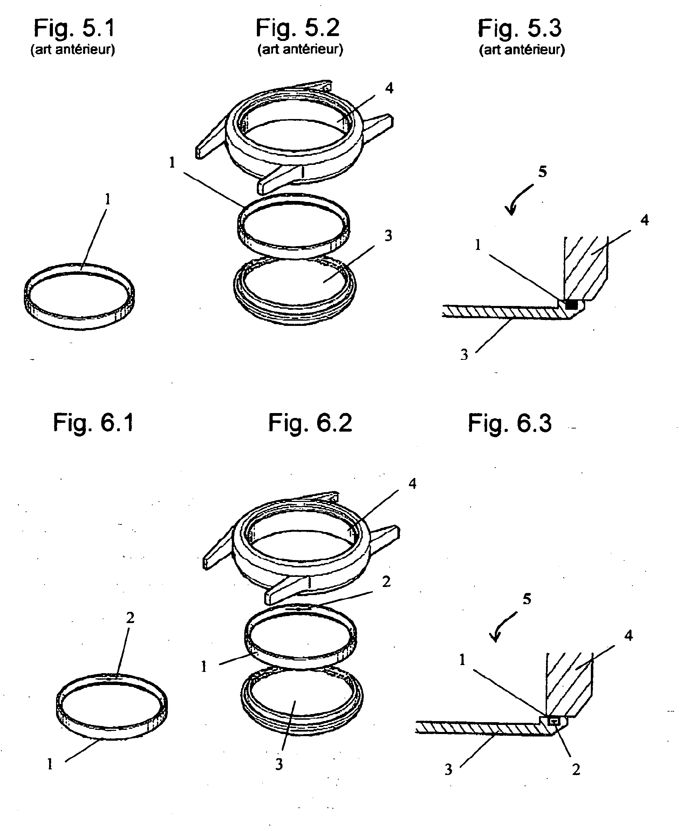

Cela dit, par souci de précision, le joint d'étanchéité 1 qui selon la présente invention comprend en tant que produit fini le module électronique 2 et qui est représenté schématiquement en vue de perspective simplifiée à la figure 2.1 et 6.1 comme d'ailleurs le joint d'étanchéité 1 d'art antérieur selon la figure 1.1 et 5.1, peut être réalisé de différentes manières, en différentes matières, formes et compositions liquides, semi-solides et/ou solides, comme par exemple sous forme de joint 1 circulaire souple qui est calé entre la glace 3, (respectivement la glace de fond en saphir 3 selon un deuxième mode de réalisation possible) et la carrure 4, ou sous forme de joint de colle 1 qui s'applique et/ou s'injecte entre la glace 3, (respectivement la glace de fond en saphir 3 selon un deuxième mode de réalisation possible) et la carrure 4, ou sous toute autre forme connue par l'homme de métier et pratiqué depuis longtemps déjà dans l'industrie horlogère.

### Premier mode d'exécution non limitatif de l'invention :

La figure 1.1 est une vue en perspective simplifiée du joint 1 pour la fermeture étanche entre la glace et la carrure d'une boîte de montre selon l'art antérieur. La montre-bracelet comporte outre les composants usuels d'une montre, la boîte de montre 5 contenant la carrure 4, la -glace 3 et le joint d'étanchéité 1, tel que représenté à la figure 1.2, qui est une vue en perspective' explosée de la boîte de montre 5, montrant de façon simplifiée la carrure 4, le joint d'étanchéité 1 et la glace 3 selon l'art antérieur. La figure 1.3 est une coupe simplifiée dans la montre-bracelet selon l'art antérieur et montre la boîte de montre 5. La montre-bracelet comporte d'autre part un mouvement horloger non représenté sur le dessin, qui est logé à l'intérieur de la boîte de montre 5 et qui est couplé à des moyens d'affichage de l'heure formés respectivement par une aiguille des secondes, une aiguille des minutes et une aiguille des heures, tel que représenté à la figure 1.3 et également parfaitement connu par l'homme du métier. Le joint d'étanchéité 1, selon le présent mode de réalisation non-limitatif de l'invention, comprend un module électronique 2, comme cela est représenté schématiquement en vue de perspective simplifiée à la figure 2.1. Ter que représenté à la figure 4, qui représente schématiquement le module électronique 2 vu de face, ledit module électronique 2 est constitué d'une antenne 2.2 et d'une puce de circuit intégré (IC) 2.1 au moins, couplé magnétiquement et/ou électro-magnétiquement à une antenne amplificatrice 2.3. Le module électronique 2 est par exemple collé sur ou dans le joint d'étanchéité 1 par des moyens connus comme par exemple par une colle de contact, et dans une position lui permettant d'être identifié et lu par un appareil de lecture et/ou d'écriture externe utilisant la technologie de l'identification par radiofréquence RFID. Mais bien entendu, ledit module électronique 2 peut être par exemple aussi inséré, placé, collé, apposé, intégré, fixé, injecté, imprimé, incorporé, calé, appliqué, appuyé, enfoncé, pressé contre, sur ou dans le joint d'étanchéité 1. Le module électronique 2 peut avoir toute forme géométrique, toute taille, toute épaisseur, toute largeur, tout volume et/ou toute dimension pour être le mieux adapté à être placé idéalement contre, à l'intérieur ou sur une face interne ou externe du joint d'étanchéité 1. Actuellement déjà il y a des modules électroniques disponibles sur le marché, qui ont une taille miniaturisée, actuellement déjà millimétrique et qui prochainement seront de taille submillimétrique et qui ne seront plus ou très difficilement visibles à l'oeil nu. Aussi peut-on noter que la structure, les fonctionnalités, le potentiel de miniaturisation et/ou l'augmentation des performances possibles dudit module électronique 2 actuelles et dans un proche futur, en particulier de la puce de circuit intégré (IC) 2.1 ainsi que de l'antenne 2.2, ne seront pas abordées ici en détail, dans la mesure où ces notions sont parfaitement connues et maîtrisées de l'homme de métier et ne concernent par directement le sujet de la présente invention. Afin d'éviter le blindage par les parties métalliques de la boîte de montre 5 et afin d'éviter toute perturbation ou inhibition de la transmission des signaux radio fréquences entre le lecteur externe et le module électronique 2, ledit module électronique 2 sera de préférence situé sur et/ou dans le joint 1, mais de préférence face à la glace, tel que représenté dans la figure 2.3 qui est une coupe agrandie simplifiée dans la montre-bracelet. La glace 3 est un substrat diélectrique comme le joint d'étanchéité 1 et présente une constante diélectrique et un facteur de perte diélectrique très favorable aux ondes radio. Ceci favorise grandement la transmission des signaux radio entre le lecteur et le module électronique 2. Au cours de ses recherches, l'Inventeur a réussi à déterminer de façon surprenante que la glace 3 a un léger effet amplificateur mesurable pour la transmission des fréquences radio entre le lecteur et le module électronique 2, si la glace 3 est en contact et/ou à proximité directe avec ledit joint d'étanchéité 1 comprenant le module électronique 2. Le joint d'étanchéité 1 est de préférence réalisé en matière diélectrique souple qui présente une constante diélectrique faible et un facteur de perte diélectrique faible, tel que par exemple réalisé en matière plastique, en silicone, en caoutchouc, en néoprène ou en toute autre matière diélectrique et/ou électriquement isolant.

La figure 4 représente schématiquement le module électronique 2 vu de face, constitué d'une puce de circuit intégré (IC) 2.1 et d'une antenne 2.2 intégrée à la puce, relié par couplage électromagnétique à une antenne amplificatrice 2.3, et présente ici une variante préférée du mode d'exécution de l'invention décrit ci-dessus. Ce dispositif est essentiellement basé sur un micro-module électronique 2 par couplage électromagnétique entre deux antennes, dont une antenne 2.2 est connectée électriquement à la puce de circuit intégré (IC) 2.1 formant le micro-module 2 et une antenne amplificatrice 2.3 de plus grandes dimensions, qui permet d'optimiser la performance et la distance de lecture et/ou d'écriture dudit micro-module électronique 2 avec un lecteur externe. Cette technologie est fondée sur le couplage électromagnétique de l'antenne 2.2 et d'une antenne amplificatrice 2.3. Le mode de fonctionnement de cette technologie ne sera pas décrite en détail ici, car faisant partie de l'état de la technique et étant parfaitement connu par l'homme de métier. Ceci dit, par couplage électromagnétique on comprend dans la présente invention toute forme de couplage entre l'antenne 2.2 et l'antenne amplificatrice 2.3 par l'intermédiaire de champ(s) électrique(s) et/ou magnétiques et/ou électromagnétiques, comme par exemple le couplage capacitif ou par induction. Par connexion électrique on désigne dans la présente invention le couplage par un contact électrique direct entre l'antenne 2.2 et la puce de circuit intégré (IC) 2.1 qui tous les deux constituent le micro-module électronique 2. Par ailleurs le terme de micro-module électronique 2 désigne tout module électronique de technologie RFID qui est de très petite taille, voir millimétrique, voir dans un proche futur même de taille submillimétrique et qui est constitué au moins d'une antenne 2.2 et d'une puce de circuit intégré (IC) 2.1 et réalisé essentiellement selon les technologies des circuits intégrés, de la microélectronique ainsi que de la nanotechnologie. Il peut s'agir d'une puce à mémoire ROM, RAM, EEPROM, flash, voir d'un microprocesseur ou de toute autre technologie connue. L'antenne amplificatrice 2.3 est une antenne d'adaptation passive qui a des dimensions adaptées au joint d'étanchéité 1 pour permettre une meilleure transmission d'information à distance entre l'antenne 2.2 contenu dans le micro-module électronique 2 et une antenne de puissance d'un appareil de lecture et/ou d'écriture externe utilisant la technologie de l'identification par radiofréquence (RFID), alors que le joint d'étanchéité 1 équipé dudit dispositif avec micro-module 2 et antenne amplificatrice 2.3 est placé dans le champ de cette antenne de puissance. Selon des innombrables variantes possibles dans le présent mode de réalisation non limitatif décrit ci-dessus, l'antenne amplificatrice 2.3 peut être réalisée de multiples façons et en différentes matières de composition comme par exemple faite de cuivre, d'aluminium ou bien d'argent, et/ou par exemple réalisée par impression sur et/ou dans le joint d'étanchéité, au moyen d'une encre composée de particules organiques ou inorganiques conducteurs, tels que des polymères conducteurs, des oxides conducteurs etc. A titre d'exemple, on utilise une composition d'encre conductrice à base d'argent ou toute autre encre conductrice qui peut être imprimée directement sur et/ou dans le joint d'étanchéité 1 par un procédé de la sérigraphie, l'héliogravure, la flexographie, l'offset ou le jet d'encre, etc. De la sorte, l'antenne amplificatrice 2.3 est facilement et économiquement réalisable sur et/ou dans le joint d'étanchéité 1 et peut sans autre être associée par couplage électromagnétique avec le micro-module électronique 2 qui, comme déjà décrit dans la présente description de l'invention, peut être par exemple inséré, placé, collé, apposé, intégré, fixé, injecté, imprimé, incorporé, calé, appliqué, appuyé, enfoncé, pressé contre, sur ou dans le joint d'étanchéité 1. Mais bien entendu d'autres variantes sont possibles et selon les multiples formes d'exécutions possibles, on peut imaginer que l'antenne amplificatrice 2.3 est posée, placée, giclée, apposée, incrustée, injectée, appliquée, apposée, fixée, vaporisée, incorporée ou bien collée par tout autre moyen de solidarisation connu partout ailleurs dans le joint d'étanchéité 1, pour autant qu'elle soit toujours placé dans une position de façon à être couplée électro-magnétiquement avec le micro-module électronique 2 qui est situé sur même support qu'est le joint d'étanchéité 1. Il est bien entendu que le joint d'étanchéité 1 comprenant ledit module électronique 2, ainsi que la montre-bracelet équipé d'un tel dispositif qui vient d'être décrite selon le mode de réalisation et ses variantes possibles, peut encore subir d'autres modifications pour une intégration optimale dudit module électronique 2 dans et/ou sur le joint d'étanchéité 1 et par là se présenter sous d'autres variantes, évidentes pour l'homme du métier, sans sortir du cadre de la présente invention. Finalement une autre variante de réalisation possible et conformément à la figure 4, se différencie uniquement par l'absence d'emplacement du micro-module électronique 2 sur et/ou dans le joint d'étanchéité 1 lui-même. Le joint d'étanchéité 1 contenant, respectivement portant uniquement l'antenne amplificatrice 2.3, le micro-module électronique 2 se trouvant dès lors placé et/ou logé ailleurs dans la boîte de montre 5, comme par exemple sur, sous ou dans la glace 3, ou bien sur, sous ou dans la carrure 4.

### Deuxième mode d'exécution non limitatif de l'invention :

La figure 5.1 est une vue en perspective simplifiée du joint 1 pour la fermeture étanche entre la glace de fond en saphir et la carrure d'une boîte de montre selon l'art antérieur. La montre-bracelet comporte outre les composants usuels d'une montre, la boîte de montre 5 contenant la carrure 4, la glace de fond en saphir 3 et le joint d'étanchéité 1, tel que représenté à la figure 5.2, qui est une vue en perspective explosée de la boîte de montre 5, montrant de façon simplifiée la carrure 4, le joint d'étanchéité 1 et la glace de fond en saphir 3 selon l'art antérieur. La figure 5.3 est une coupe très simplifiée dans la montre-bracelet selon l'art antérieur et montre le bas de la boîte de montre 5 avec la carrure 4, la glace de fond en saphir 3 et le joint d'étanchéité 1. Le joint d'étanchéité 1, selon ce deuxième mode de réalisation de l'invention comprend un module électronique 2, comme cela est représenté schématiquement en vue de perspective simplifiée à la figure 6.1. La figure 6.2 qui est une vue en perspective explosée de la boîte de montre, montre de façon très simplifiée la carrure 4, le joint 1 comprenant le module électronique 2, et la glace de fond en saphir. Tel que représenté à la figure 4 3, qui représente schématiquement le module électronique 2 vu de face, ledit module électronique 2 peut être de très petit format compact, constitué d'une antenne 2.2 et d'une puce de circuit intégré (IC) 2.1 au moins couplé magnétiquement et/ou électro-magnétiquement à une antenne amplificatrice 2.3. Le module électronique 2, par exemple en format compact et très petit de micro-module qui est idéal pour toute forme d'injection dans son support porteur, est par exemple injecté dans le joint d'étanchéité 1 lors de sa fabrication, par les moyens amplement connus dans l'industrie, comme par exemple par un procédé de moulage par injection (injection moulding), ou par impression etc., et dans une position lui permettant d'être identifié par un lecteur RFID. Toutefois, le module électronique 2 peut avoir toute autre forme, caractéristiques et taille le mieux adapté pour être placé sur et/ou dans le joint d'étanchéité 1. Afin d'éviter le blindage par les parties métalliques du bas de la boîte de montre 5 et afin d'éviter toute perturbation ou inhibition de la transmission des signaux radio fréquences entre le lecteur externe et le module électronique 2, ledit module électronique 2 sera de préférence situé sur et/ou dans le joint 1, mais de préférence face à la glace de fond en saphir, tel que représenté dans la figure 6.3 qui est une coupe très simplifiée dans le fond de la boîte de montre et Le module électronique 2 et son antenne 2.2 a une dimension adaptée à la taille du joint d'étanchéité 1 tout en assurant une transmission d'information à distance satisfaisante entre ledit module électronique 2 et une antenne de puissance d'un appareil de lecture et/ou d'écriture externe utilisant la technologie de l'identification par radiofréquence (RFID), alors que le joint d'étanchéité 1 équipé dudit module électronique 2 est placé dans le champ de cette antenne de puissance. Il est bien entendu que le joint d'étanchéité 1 comprenant ledit module électronique 2, ainsi que la montre-bracelet équipé d'un tel dispositif qui vient d'être décrite selon le deuxième mode de réalisation, peut encore subir d'autres modifications pour une intégration optimale d'un module électronique 2 dans et/ou sur le joint d'étanchéité 1 et par là se présenter sous d'autres variantes, évidentes pour l'homme du métier, sans sortir du cadre de la présente invention. Ainsi une variante de réalisation possible et conformément à la figure 4, se différencie uniquement par l'absence d'emplacement d'un dit micro-module électronique 2 sur et/ou dans le joint d'étanchéité 1 lui-même. Le joint d'étanchéité 1 contenant, respectivement portant uniquement l'antenne amplificatrice 2.3, le micro-module électronique 2 se trouvant dès lors placé et/ou logé ailleurs dans la boîte de montre 5, comme par exemple sur, sous ou dans la glace du fond en saphir 3, où bien sur, sous ou dans la carrure 4.

Enfin, d'autres développements et applications sont également imaginables en ce qui concerne la technologie du module électronique 2, respectivement du micro-module électronique 2 qui est utilisé dans la présente invention, ceci grâce à l'évolution rapide des nanotechnologies dans les domaines de la RFID et des capteurs. Par exemple le module électronique 2 dit actif et/ou semi-actif muni d'une batterie interne miniaturisée, ou bien l'utilisation de la 'Extended capability RFID', qui unit la RFID avec les capteurs, un dispositif transformant l'état d'une grandeur physique observée en une grandeur utilisable, comme la mesure de la température, sont possibles. On peut finalement noter que la structure et les fonctionnalités connues de la technologie RFID, de la montre-bracelet, de la boîte de montre 5, de la glace 3, de la carrure 4, ainsi que du joint d'étanchéité 1, n'ont pas été abordées plus en détail dans la présente description, dans la mesure où ces notions sont parfaitement connues de l'homme de métier et ne concernent par directement le sujet de la présente invention.

## Revendications

1. Joint (1) pour la fermeture étanche entre la glace (3) et la carrure d'une boîte de montre (5), ledit joint (1) contenant un module électronique (2) constitué d'une puce de circuit intégré (2.1) et d'une antenne (2.2) au moins, **caractérisé en ce que** ledit module électronique (2) est couplé magnétiquement et/ou électromagnétiquement à une antenne amplificatrice (2.3) située également sur et/ou dans ledit joint (1).

2. Boîte de montre (5) comprenant une carrure (4) et un joint (1) pour la fermeture étanche entre une glace (3) et la carrure (4), ledit joint (1) contenant une antenne amplificatrice (2.3) qui est couplée magnétiquement et/ou électromagnétiquement à un module électronique (2) constitué d'une puce de circuit intégré (2.1) et d'une antenne (2.2) au moins, ledit module électronique (2) étant placé et/ou logé ailleurs qu'entre la glace et la carrure dans ladite boîte de montre(s), à savoir sur, sous ou dans la carrure (4).

3. Boîte de montre (5) comprenant une carrure (4), une glace (3) et un joint (1) pour la fermeture étanche entre ladite glace (3) et ladite carrure (4), ledit joint (1) contenant une antenne amplificatrice (2.3) qui est couplée magnétiquement et/ou électro-magnétiquement à un module électronique (2) constitué d'une puce de circuit intégré (2.1) et d'une antenne (2.2) au moins, ledit module électronique (2) étant placé et/ou logé ailleurs qu'entre la glace et la carrure dans la boîte de montre (5), à savoir sur, sous ou dans ladite glace (3).

4. Joint (1) ou boîte de montre (5) selon l'une des revendications précédentes, **caractérisé en ce que** ledit joint (1) est un joint de colle (1).

5. Joint (1) ou boîte de montre (5) selon l'une des revendications précédentes, **caractérisé en ce que** ledit module électronique (2) est un micro-module électronique (2).

6. Joint (1) ou boîte de montre (5) selon l'une des revendications précédentes, **caractérisé**(e) en ce que ledit module électronique (2) est de technologie utilisant l'identification par radiofréquence RFID, notamment EPC ou NFC.

7. Joint (1) ou boîte de montre (5) selon l'une des revendications précédentes, **caractérisé en ce que** le module électronique (2) est passif et/ou semi-actif et/ou actif.

8. Joint (1) ou boîte de montre (5) selon l'une des revendications précédentes, **caractérisé en ce que** le module électronique (2) est muni d'une batterie interne miniaturisée.

9. Joint (1) ou boîte de montre (5) selon l'une des revendications précédentes, **caractérisé en ce que** ledit module électronique (2) est de technologie utilisant l' « Extended capability RFID » qui unit la RFID avec les capteurs.

10. Boîte de montre (5) selon l'une des revendications 3 à 9, **caractérisé en ce que** la glace (3) est une glace de fond en saphir (3).

11. Montre-bracelet comportant une boîte de montre (5) selon l'une quelconque des revendications 2 à 10.

## Claims

1. Gasket (1) for sealing the glass (3) and the middle of a watch case (5), said gasket (1) equipped with an electronic module (2) consisting of at least an integrated circuit chip (2.1) and an antenna (2.2), **characterized in that** the aforementioned electronic module (2) is magnetically and/or electromagnetically coupled to a booster antenna (2.3) that is also located on and/or in said gasket (1).

2. Watch case (5) including a middle (4) and a gasket (1) for sealing the glass (3) and the middle (4), said gasket (1) containing a booster antenna (2.3) that is magnetically and/or electromagnetically coupled to an electronic module (2) consisting of at least an integrated circuit chip (2.1) and an antenna (2.2), said electronic module (2) being placed and/or housed elsewhere than between the glass and the middle of said watch case (5), namely on, in or under the middle (4).

3. Watch case (5) including a middle (4), a glass (3) and a gasket (1) for sealing said glass (3) and said middle (4), the aforementioned gasket (1) containing a booster antenna (2.3) that is magnetically and/or electromagnetically coupled to an electronic module (2) consisting of at least an integrated circuit chip (2.1) and an antenna (2.2), said electronic module (2) being placed and/or elsewhere than between the glass and the middle in the watch case (5), namely on, in or under said glass (3).

4. Gasket (1) or watch case (5) according to one of the preceding claims, **characterized in that** said gasket (1) is a glue joint (1).

5. Gasket (1) or watch case (5) according to one of the preceding claims, **characterized in that** said electronic module (2) is an electronic micro-module (2).

6. Gasket (1) or watch case (5) according to one of the preceding claims, **characterized in that** said electronic module (2) is technology using radio frequency identification RFID, in particular EPC or NFC.

7. Gasket (1) or watch case (5) according to one of the preceding claims, **characterized in that** said electronic module (2) is of passive and/or semi-active and or active type.

8. Gasket (1) or watch case (5) according to one of the preceding claims, **characterized in that** said electronic module (2) has an internal miniature battery.

9. Gasket (1) or watch case (5) according to one of the preceding claims, **characterized in that** said electronic module (2) is « Extended capability RFID » technology combining RFID with sensors.

10. Watch case (5) according to one of the claims 3 to 9, **characterized in that** the glass (3) is a bottom glass (3).

11. Wristwatch including a watch case (5) according to one of the claims 2 to 10.

## Patentansprüche

1. Dichtung (1) zum wasserdichten Abschliessen zwischen dem Glas (3) und dem Uhrengehäuse (5), welche Dichtung (1) ein elektronisches Modul (2) beinhaltet, bestehend aus mindestens einer integrierten Schaltung (Chip) (2.1) und einer Antenne (2.2), **dadurch gekennzeichnet, dass** das genannte elektronische Modul (2) magnetisch und/oder elektromagnetisch mit einer Verstärkerantenne (2.3) gekoppelt ist, welche ebenfalls auf und/oder in der Dichtung (1) angeordnet ist.

2. Uhrengehäuse (5) mit einem Mittelteil (4) und einer Dichtung (1) zum wasserdichten Abschliessen zwischen einem Glas (3) und dem Mittelteil (4), welche Dichtung (1) eine Verstärkerantenne (2.3) enthält die magnetisch und /oder elektromagnetisch gekoppelt ist mit einem elektronischen Modul (2) bestehend mindestens aus einer integrierten Schaltung (Chip) (2.1) und einer Antenne (2.2), welches elektronische Modul (2) anderswo angeordnet ist und/oder untergebracht ist als zwischen dem Glas und dem Mittelteil im genannten Uhrengehäuse (5), namentlich auf, unter oder im Mittelteil (4).

3. Uhrengehäuse (5) mit einem Mittelteil (4), einem Glas (3) und einer Dichtung (1) zum wasserdichten Abschliessen zwischen genanntem Glas (3) und genanntem Mittelteil (4), welche Dichtung (1) eine Verstärkerantenne (2.3) enthält die magnetisch und /oder elektromagnetisch gekoppelt ist mit einem elektronischen Modul (2) bestehend mindestens aus einer integrierten Schaltung (Chip) (2.1) und einer Antenne (2.2), welches elektronische Modul (2) anderswo angeordnet ist und/oder untergebracht ist als zwischen dem Glas und dem Mittelteil im Uhrengehäuse (5), namentlich auf, unter oder im Glas (3).

4. Dichtung (1) oder Uhrengehäuse (5) gemäss einem der vorherigen Ansprüche, **dadurch gekennzeichnet, dass** die genannte Dichtung (1) ein Klebstoff ist.

5. Dichtung (1) oder Uhrengehäuse (5) gemäss einem der vorherigen Ansprüche, **dadurch gekennzeichnet, dass** genanntes elektronisches Modul (2) ein elektronisches Mikromodul (2) ist.

6. Dichtung (1) oder Uhrengehäuse (5) gemäss einem der vorherigen Ansprüche, **dadurch gekennzeichnet, dass** genanntes elektronisches Modul (2) auf der RFID (Radio Frequency-Identification) Technologie beruht, namentlich EPC oder NFC.

7. Dichtung (1) oder Uhrengehäuse (5) gemäss einem der vorherigen Ansprüche, **dadurch gekennzeichnet, dass** das elektronische Modul (2) eine passive, halbaktive und/oder eine aktive Funktionsweise hat.

8. Dichtung (1) oder Uhrengehäuse (5) gemäss einem der vorherigen Ansprüche, **dadurch gekennzeichnet, dass** das elektronische Modul (2) eine interne miniaturisierte Batterie beinhaltet.

9. Dichtung (1) oder Uhrengehäuse (5) gemäss einem der vorherigen Ansprüche, **dadurch gekennzeichnet, dass** das elektronische Modul (2) auf der «Extended capability RFID» Technologie beruht, einer Kombination aus RFID und Sensorik.

10. Uhrengehäuse (5) gemäss einem der Ansprüche 3 bis 9, **dadurch gekennzeichnet, dass** das Glas (3) ein Saphir Bodenglas (3) ist.

11. Armbanduhr beinhaltend ein Uhrengehäuse (5) gemäss einem der vorherigen Ansprüche 2 bis 10.
